# EUROPÄISCHE PATENTSCHRIFT

(11) **EP 1 303 693 B1**
(45) Veröffentlichungstag und Bekanntmachung des Hinweises auf die Patenterteilung: **07.12.2005**
(21) Anmeldenummer: 01953110.2
(22) Anmeldetag: 19.06.2001
(51) Int. Cl.: F02D 41/38, F02D 41/40

(54) **VERFAHREN UND VORRICHTUNG ZUR STEUERUNG EINER BRENNKRAFTMASCHINE**
METHOD AND DEVICE FOR CONTROLLING AN INTERNAL COMBUSTION ENGINE
PROCEDE ET DISPOSITIF POUR COMMANDER UN MOTEUR A COMBUSTION INTERNE

(30) Priorität: 18.07.2000 DE 10034807; 11.05.2001 DE 10123035
(43) Veröffentlichungstag der Anmeldung: 23.04.2003
(73) Patentinhaber: ROBERT BOSCH GMBH, 70442 Stuttgart (DE)
(72) Erfinder: PFAEFFLE, Andreas, 71543 Wuestenrot (DE); HAMMEL, Christof, 70188 Stuttgart (DE); SCHUBERT, Peter, 74211 Leingarten (DE); KELLNER, Andreas, 71696 Moeglingen (DE)
(86) Internationale Anmeldenummer: PCT/DE2001/002264
(87) Internationale Veröffentlichungsnummer: WO 2002/006655

(56) Entgegenhaltungen:
- EP-A- 0 570 986
- EP-A- 0 899 443
- EP-A- 0 921 296
- US-A- 6 032 642

## Beschreibung

Die Erfindung betrifft ein Verfahren und eine Vorrichtung zur Steuerung einer Brennkraftmaschine gemäß den Oberbegriffen der unabhängigen Ansprüche.

Ein Verfahren und eine Vorrichtung zur Steuerung einer Brennkraftmaschine sind aus der DE 197 12 143 bekannt. Bei der dort beschriebenen Vorgehensweise wird die Kraftstoffeinspritzung eines Zykluses in eine erste Teileinspritzung und eine zweite Teileinspritzung aufgeteilt. Dabei wird der Raildruck, der zur Berechnung der Einspritzdauer der Haupteinspritzung verwendet wird, abhängig von der Dauer der Voreinspritzung und dem Abstand zwischen der Vor- und der Haupteinspritzung korrigiert.

Bei solchen Common-Rail-Systemen treten nach jeder Einspritzung Druckschwankungen auf. Die während der Haupteinspritzung eingespritzte Kraftstoffmenge hängt wesentlich vom Kraftstoffdruck bei der Haupteinspritzung ab. Schwankungen des Kraftstoffdrucks haben Schwankungen der eingespritzten Kraftstoffmenge zur Folge.

### Aufgabe der Erfindung

Der Erfindung liegt die Aufgabe zugrunde, den Einfluss von Druckschwankungen auf die einzuspritzende Kraftstoffmenge zu verringern. Diese Aufgabe wird durch die in unabhängigen Ansprüchen gekennzeichneten Merkmale gelöst.

### Vorteile der Erfindung

Dadurch, dass bei der zweiten Teileinspritzung eine Kraftstoffmengengröße, die die bei der zweiten Teileinspritzung eingespritzten Kraftstoffmenge charakterisiert, abhängig von wenigstens einer Druckgröße, die den Kraftstoffdruck charakterisiert, und der Kraftstoffmengengröße korrigierbar ist, kann der Einfluß der nachfolgenden Teileinspritzung auf die nachfolgende Teileinspritzung deutlich reduziert werden. Als Druckgröße wird bei einem sog. Common-Rail-System vorzugsweise der Raildruck verwendet. Als Kraftstoffmengengröße, kann eine einzuspritzende Kraftstoffmenge, eine Ansteuerdauer für ein entsprechenden Steller oder eine andere die einzuspritzende Kraftstoffmenge charakterisierende Größe verwendet werden.

Eine weitere Reduzierung des Einflusses der beiden Teileinspritzungen aufeinander kann dadurch erreicht werden, wenn zusätzlich die Kraftstoffmengengröße abhängig von einem Abstand der beiden Teileinspritzungen und/oder einer Temperaturgröße korrigierbar ist. Dabei kann der Abstand des tatsächlichen Einspritzendes und des tatsächlichen Einspritzbeginns verwendet werden. Alternativ kann auch der Abstand zwischen dem Ansteuerende und dem Ansteuerbeginn berücksichtigt werden. Alternativ können auch andere den Abstand zwischen den Teileinspritzungen charakterisierende Größen herangezogen werden.

Besonders vorteilhaft ist es, wenn die so korrigierte Kraftstoffmengengröße auf einen Minimalwert begrenzt wird. Dies bedeutet, wird die Kraftstoffmengengröße kleiner als ein Minimalwert, so wird als Kraftstoffmengengröße der Minimalwert verwendet.

Bevorzugt ist der Minimalwert wenigstens abhängig von dem Raildruck und/oder dem Abstand der beiden Teileinspritzungen vorgebbar.

Besonders vorteilhaft ist es, wenn diese Korrektur nach einer weiteren Korrektur durch eine Mengenausgleichsregelung erfolgt. Durch die Reihenfolge der Korrekturen wird verhindert, dass sich die beiden Korrekturen ungünstig beeinflussen.

Dadurch, dass die Korrektur nur in bestimmten Betriebszuständen erfolgt, wird erreicht, dass die Korrektur nur in den Betriebszuständen erfolgt, in denen sich die beiden Teileinspritzungen beeinflussen bzw. in denen die Korrektur wirksam ist.

Besonders einfach gestaltet sich die Korrektur dadurch, dass ein Grundwert abhängig von wenigstens der Druckgröße und/oder dem Abstand der beiden Teileinspritzungen ermittelt wird, dass ein Gewichtungsfaktor abhängig von wenigstens der Kraftstoffmengengröße ermittelt wird und dass, dass die Korrektur der einzuspritzenden Kraftstoffmenge abhängig von dem mit dem Gewichtungsfaktor bewerteten Grundwert erfolgt.

### Zeichnung

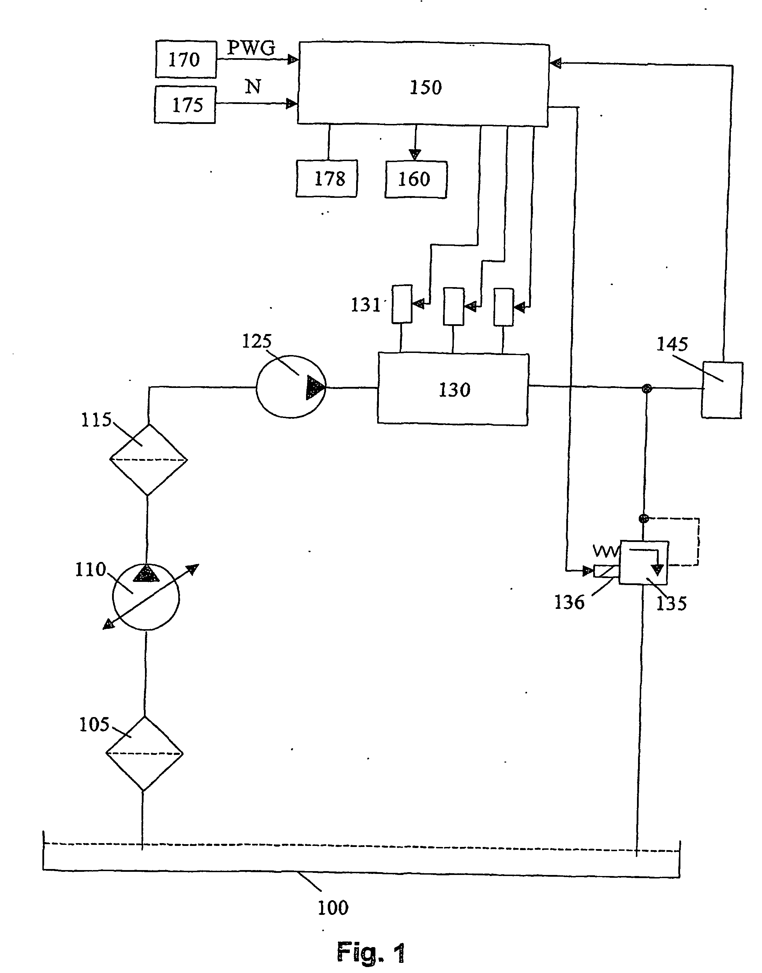

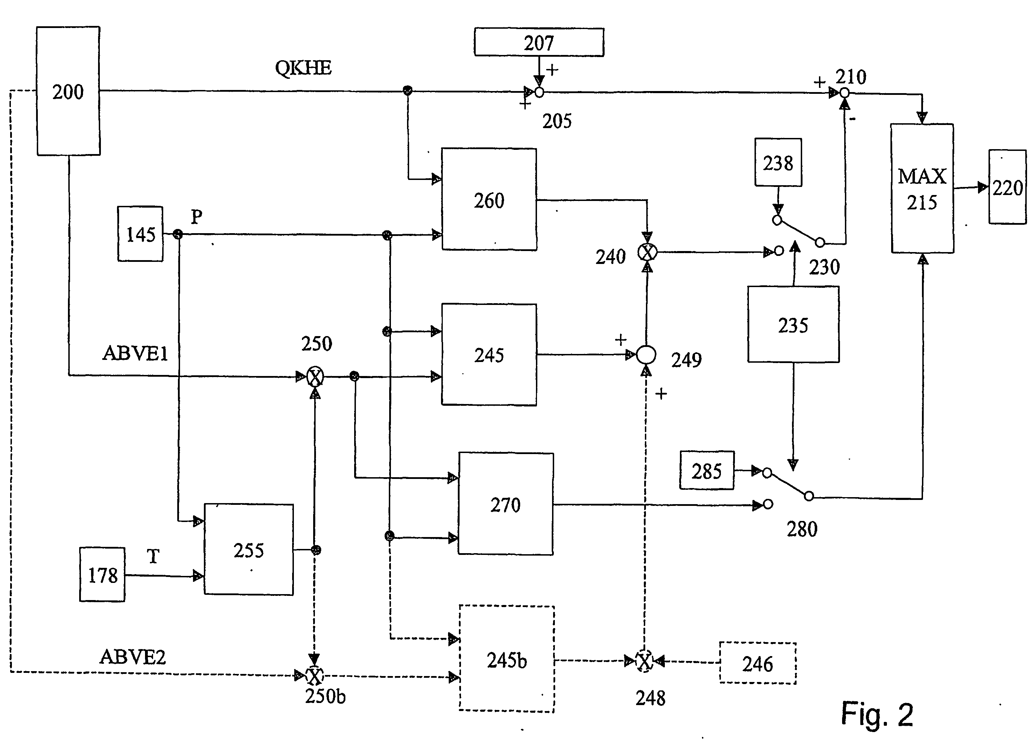

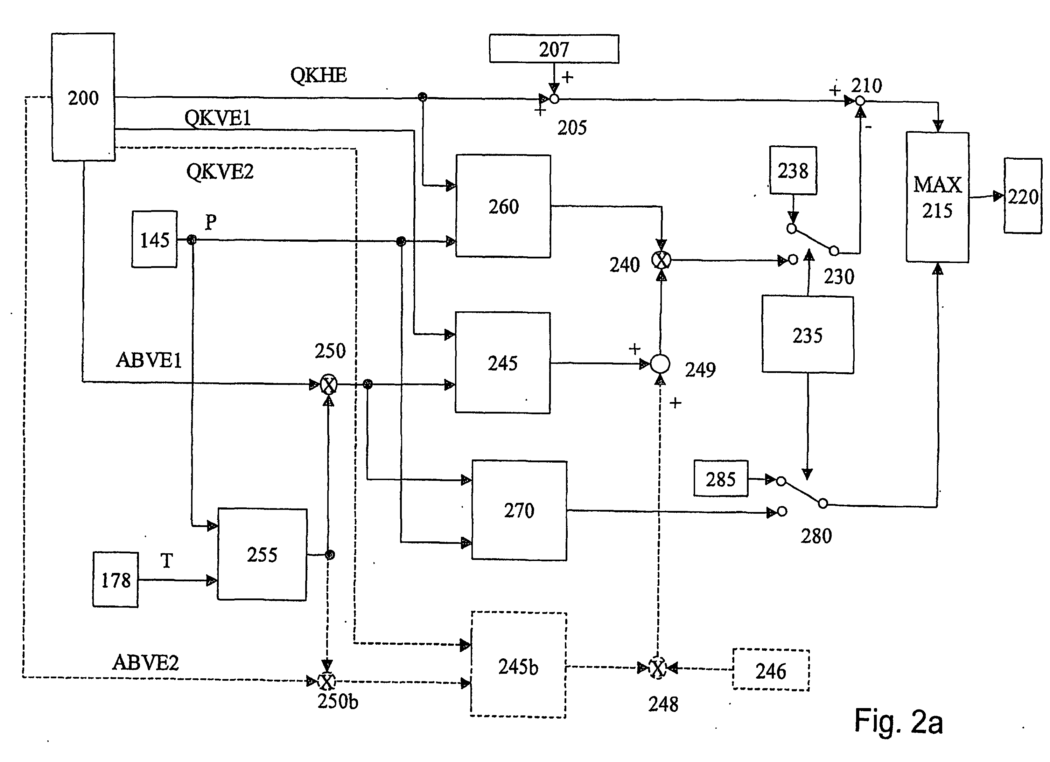

Die Erfindung wird nachfolgend anhand der in der Zeichnung dargestellten Ausführungsformen erläutert. Es zeigen Figur 1 ein Blockdiagramm der erfindungsgemäßen Vorrichtung, die Figuren 2, 3 und 4 und 5 verschiedene Ausgestaltungen der erfindungsgemäßen Vorgehensweise anhand eines Blockdiagrammes.

In Figur 1 ist ein Kraftstoffversorgungssystem einer Brennkraftmaschine dargestellt. Das dargestellte System wird üblicherweise als Common-Rail-System bezeichnet.

Mit 100 ist ein Kraftstoffvorratsbehälter bezeichnet. Dieser steht über einen ersten Filter 105, einer Vorförderpumpe 110 mit einem zweiten Filtermittel 115 in Verbindung. Vom zweiten Filtermittel 115 gelangt der Kraftstoff über eine Leitung zu einer Hochdruckpumpe 125. Die Hochdruckpumpe 125 steht mit einem Rail 130 in Verbindung.

Das Rail 130, das auch als Speicher bezeichnet werden kann, steht über Kraftstoffleitungen mit verschiedenen Injektoren 131 in Kontakt. Über ein Druckregelventil 135 ist das Rail 130 mit dem Kraftstoffvorratsbehälter 110 verbindbar. Das Druckregelventil 135 ist mittels einer Spule 136 steuerbar.

Der Bereich zwischen dem Ausgang der Hochdruckpumpe 125 und dem Eingang des Druckregelventils 135 wird als Hochdruckbereich bezeichnet. In diesem Hochdruckbereich steht der Kraftstoff unter hohem Druck. Der Kraftstoffdruck im Hochdruckbereich wird mittels eines Sensors 145 erfaßt.

Das Ausgangssignal des Sensors 145 gelangt zu einer Steuereinheit 150. Die Steuereinheit beaufschlagt die Spule 136 des Druckregelventils 135 mit einem Ansteuersignal. Desweiteren werden weitere Steuereinheiten 160 mit Ansteuersignalen beaufschlagt. Hierbei handelt es sich beispielsweise um Steller zur Beeinflussung der Abgasrückführrate, des Ladedrucks, der eingespritzten Kraftstoffmenge und/oder des Einspritzbeginns. Die Steuerung der Einspritzung von Kraftstoff erfolgt durch die Ansteuerung der Injektoren 131.

Die Steuereinheit 150 verarbeitet die Signale verschiedener Sensoren 170 und 175. Der Sensor 170 liefert eine Signal PWG, das der Fahrpedalstellung entspricht. Der Sensor 175 liefert ein Drehzahlsignal N. Ferner können noch weitere Sensoren 178 vorgesehen sein, die weitere Signale beispielsweise bzgl. der Stellung, der Kupplung oder des Getriebes liefern.

Diese Einrichtung arbeitet wie folgt. Der Kraftstoff, der sich im Vorratsbehälter 100 befindet, wird von der Vorförderpumpe 110 durch die Filtermittel 105 und 115 gefördert. Ausgangsseitig der Vorförderpumpe 110 ist der Kraftstoff mit einem Druck zwischen 1 und ca. 3 bar beaufschlagt.

Die Hochdruckpumpe 125 fördert den Kraftstoff vom Niederdruckbereich in den Hochdruckbereich. Die Hochdruckpumpe 125 baut im Rail 130 einen sehr hohen Druck auf. Üblicherweise werden bei Systemen für fremdgezündete Brennkraftmaschinen Druckwerte von ca. 30 bis 100 bar und bei selbstzündenden Brennkraftmaschinen Druckwerte von ca. 1000 bis 2000 bar erzielt. Über die Injektoren 131 kann der Kraftstoff unter hohem Druck den einzelnen Zylindern der Brennkraftmaschine zugemessen werden.

Mittels des Sensors 145 wird der gemessene Kraftstoffdruck P im Rail bzw. im gesamten Hochdruckbereich erfaßt. Mittels des Druckregelventils 135, das mit einer Spule 136 ansteuerbar ist, kann beispielsweise der Druck im Hochdruckbereich geregelt werden. Abhängig von der an der Spule 136 anliegenden Spannung bzw. des durch die Spule 136 fließenden Stromes öffnet das Druckregelventil 135 bei unterschiedlichen Druckwerten. Ferner kann bei auch vorgesehen sein, dass die Druckregelung mittels einer steuerbaren Hochdruckpumpe erfolgt.

Häufig wird die Einspritzung während eines Zumesszykluses in mehrere Teileinspritzungen aufgeteilt. In der Regel ist wenigstens eine oder zwei Voreinspritzungen, eine Haupteinspritzung und eine Nacheinspritzung vorgesehen. Die Abstände der einzelnen Teileinspritzungen sind variabel applizierbar d. h. sie können abhängig von dem System fest vorgegeben bzw. bei besonders vorteilhaften Ausführungsformen abhängig vom Betriebszustand der Brennkraftmaschine vorgegeben werden.

Die jeweilige Einspritzung wird wesentlich von der vorausgegangenen und schwächer von den weiter vorgelagerten Einspritzungen beeinflusst. Dies beruht vorzugsweise darauf, dass eine Einspritzung eine Druckwelle in der Leitung zwischen dem Rail und dem Injektor verursacht.

Erfindungsgemäß wird zur Kompensation des Einflusses der Druckwelle eine zusätzliche Korrekturmenge bereitgestellt, die die gewünschte Einspritzmenge so manipuliert, dass die berechnete Ansteuerdauer der so korrigierten Einspritzmenge sich so verhält, dass die gewünschte Einspritzmenge auch tatsächlich eingespritzt wird.

Durch das erfindungsgemäße Verfahren und die erfindungsgemäße Vorrichtung wird die Einspritzmengenänderung, die insbesondere durch Druckwellen verursacht werden, die durch vorausgegangene Einspritzungen verursacht sind, reduziert und dadurch-die Mengengenauigkeit des Common-Rail-Systems bei Mehrfacheinspritzungen verbessert.

Bei der dargestellten Vorgehensweise erfolgt die Korrektur der Einspritzmenge vorzugsweise abhängig von direkt vorgelagerten Einspritzungen. Weit vorgelagerte Einspritzungen können in der Regel vernachlässigt werden. Insbesondere werden lediglich Einspritzungen desselben Zumesszykluses, also Teileinspritzungen, berücksichtigt.

Die zeitlich erste Teileinspritzung wird im folgenden jeweils als vorgelagerte Teileinspritzung und die zeitlich folgende zweite Teileinspritzung als nachgelagerte Teileinspritzung bezeichnet.

In Figur 2 ist eine erste Ausführungsform als Blockdiagramm dargestellt. Bereits in Figur 1 beschriebene Elemente sind mit entsprechenden Bezugszeichen bezeichnet. Die in Figur 2 dargestellte Struktur ist vorzugsweise in der Steuereinheit 150 enthalten. Insbesondere ist die Struktur als Programm für die Durchführung des entsprechenden Verfahrens ausgebildet.

Das im Folgenden beschriebene Verfahren gilt insbesondere für die Korrektur des Einflusses der ersten Voreinspritzung auf die nachfolgende zweite Voreinspritzung und den Einfluss der zweiten Voreinspritzung auf die unmittelbar nachfolgende Haupteinspritzung. Bei einer besonders vorteilhaften Ausgestaltung wird der Einfluß zweier Voreinspritzungen auf die Haupteinspritzung korrigiert.

Im Folgenden wird die Korrektur am Beispiel der Korrektur der Menge der Haupteinspritzung QKHE beschrieben. Eine Mengenvorgabe 200 bestimmt ein Signal QKHE, das die Einspritzmenge bei der Haupteinspritzung charakterisiert. Mit diesem Signal wird ein Verknüpfungspunkt 205 beaufschlagt. Am zweiten Eingang des Verknüpfungspunktes 205 liegt ebenfalls mit positiven Vorzeichen das Ausgangssignal einer Mengenausgleichsregelung 207. Das Ausgangssignal des Verknüpfungspunktes 205 gelangt mit positiven Vorzeichen zu einem zweiten Verknüpfungspunkt 210, der wiederum eine Maximalauswahl 215 beaufschlagt. Mit dem Ausgangssignal der Maximalauswahl 215 wird dann eine Kennfeldberechnung 220 beaufschlagt, die aus den Mengengrößen und weiteren Größen, wie beispielsweise dem Kraftstoffdruck, die Ansteuerdauer für die Injektoren bestimmt.

Am zweiten Eingang des Verknüpfungspunktes 210 liegt mit negativen Vorzeichen, das Ausgangssignal eines Schaltmittels 230, das wahlweise das Ausgangssignal einer Nullwertvorgabe 238 bzw. eines Verknüpfungspunktes 240 an den Verknüpfungspunkt 210 weiterleitet. Das Schaltmittel 230 wird von einer Korrektursteuerung 235 mit Ansteuersignalen beaufschlagt. Der Verknüpfungspunkt 240 verknüpft vorzugsweise multiplikativ das Ausgangssignal einer Grundwertvorgabe 245 und das Ausgangssignal einer Gewichtungsfaktorvorgabe 260.

Der Gewichtungsfaktorvorgabe 260 wird das Ausgangssignal QKHE der Mengenvorgabe 200 und das Ausgangssignal P des Raildrucksensors 145 zugeführt. Die Grundwertvorgabe 245 verarbeitet das Ausgangssignal P des Drucksensors 145 sowie das Ausgangssignal eines Verknüpfungspunktes 250. Dem Verknüpfungspunkt 250 wird von der Mengenvorgabe 200 ein Signal, das den Abstand ABVE1 zwischen den beiden Teileinspritzungen charakterisiert, zugeleitet. Desweiteren wird im Verknüpfungspunkt 250 ein Korrekturfaktor, der von einer Temperaturkorrektur 255 bestimmt wird, zugeleitet. Die Temperaturkorrektur 255 verarbeitet das Ausgangssignal T eines Temperatursensors 178 und das Ausgangssignal P des Druckraildrucksensors 145.

Einer Minimalwertvorgabe 270 wird ebenfalls das Ausgangssignal des Drucksensors 145 und das Ausgangssignal des Verknüpfungspunktes 250 zugeleitet. Dieses Signal gelangt zu einem Schaltmittel 280, an dessen zweiten Eingang das Ausgangssignal einer Minimalwertvorgabe 285 anlegt. Das Schaltmittel 280 leitet eines der beiden Signale, abhängig von dem Ansteuersignal einer der Korrektursteuerung 235 einen zweiten Eingang der Maximalauswahl 215 weiter.

Bei einer besonders vorteilhaften Ausgestaltung ist vorgesehen, dass auch der Einfluss einer zweiten Teileinspritzung berücksichtigt wird, die zeitlich vor der ersten Teileinspritzung liegt. Diese Ausführungsform ist gestrichelt dargestellt. Eine Weitere Grundwertvorgabe 245b verarbeitet das Ausgangssignal P des Drucksensors 145 sowie das Ausgangssignal eines Verknüpfungspunktes 250b. Dem Verknüpfungspunkt 250b wird von der. Mengenvorgabe 200 ein Signal, das den Abstand ABVE2 zwischen der zu korrigierenden Teileinspritzung und der Teileinspritzung deren Abstand berücksichtigt wird, charakterisiert. Das Ausgangssignal der Grundwertvorgabe 245 b wird in einem weiteren Verknüpfungspunkt 248 mit dem Signal einer Wichtung 246 verknüpft, die den durch die zwischengelagerte Einspritzung abgeschwächten Einfluß berücksichtigen.

In der Mengenvorgabe 200 wird die einzuspritzende Kraftstoffmenge QKHE der Haupteinspritzung abhängig von verschiedenen Betriebskenngrößen wie beispielsweise dem Fahrerwunsch und der Drehzahl abgelegt. Dieser Wert wird im Verknüpfungspunkt 205 um das Ausgangssignal der Mengenausgleichsregelung 207 korrigiert. Die Mengenausgleichsregelung stellt sicher, dass alle Zylinder das gleiche Drehmoment zum Gesamtdrehmoment beitragen. Durch die Mengenausgleichsregelungen werden Streuungen der Injektoren bei der eingespritzten Kraftstoffmenge und/oder Einflüsse auf die Verbrennung, die zu ungleichen Drehmomenten führen, kompensiert.

Die so gebildete einzuspritzende Kraftstoffmenge QKHE für die Haupteinspritzung wird in dem Verknüpfungspunkt 210 mit einem Korrekturwert korrigiert, der den Einfluss der Druckschwankungen aufgrund der Voreinspritzung kompensiert. Der Korrekturwert setzt sich im wesentlichen aus dem Grundwert und einem Gewichtungsfaktor zusammen, die in dem Verknüpfungspunkt 240 multiplikativ verknüpft werden.

Der Grundwert ist in der Grundwertvorgabe 245, die vorzugsweise als Kennfeld ausgebildet ist, abgelegt. Der Grundwert wird von dem Kennfeld der Grundwertvorgabe 245 abhängig von dem Raildruck P und einem korrigierten Abstand ABVE1 zwischen den beiden Teileinspritzungen aus dem Kennfeld ausgelesen. Vorzugsweise stellt die Abhängigkeit des Grundwerts vom Abstand eine periodische Funktion, die von den Druckschwingungen beeinflußt ist. Die Grundwertvorgabe 245 berücksichtigt im wesentlichen die Frequenz der Druckschwingungen.

Wird auch der Einfluß der weiter zurückliegenden Teileinspritzung berücksichtigt, so werden zwei Grundwerte für die beiden zu berücksichtigen Teileinspritzungen gebildet. Der durch vorzugsweise additive Verknüpfung gebildete Grundwert wird entsprechend verwendet.

Der Gewichtungsfaktor wird von der Gewichtungsfaktorvorgabe 260, die ebenfalls als Kennfeld ausgebildet ist, abhängig von dem Raildruck P und der einzuspritzenden Kraftstoffmenge bei der zu korrigierenden Einspritzung vorgegeben. Die Gewichtungsvorgabe berücksichtigt im wesentlichen die Amplitude der Druckschwingungen. Anschließend werden die beiden Werte multipliziert.

Bei dieser Ausführungsform wird der Grundwert ausgehend von Größen vorgegeben, die den Raildruck P und einem korrigierten Abstand ABVE1 zwischen den beiden Teileinspritzungen charakterisieren. Der Gewichtungsfaktor wird ausgehend von Größen, die den Raildruck P und die einzuspritzende Kraftstoffmenge bei der zu korrigierenden Einspritzung charakterisieren, vorgegeben.

Mittels des Schalters 230 kann die Korrektur in bestimmten Betriebszuständen außer Funktion gesetzt werden. In diesen Betriebszuständen, in denen keine Korrektur erfolgt, wird von der Nullwertvorgabe 238 der Wert 0 als Korrekturwert vorgegeben.

Besonders vorteilhaft ist es, wenn der Abstand ABVE1 zwischen den beiden Teileinspritzungen abhängig von der Temperatur korrigiert wird. Hierzu ist in der Temperaturkorrektur 255 ein entsprechender Korrekturfaktor abhängig insbesondere von dem Raildruck P und/oder der Temperatur T abgelegt. Mit diesem.Korrekturfaktor wird der Abstand ABVE1 im Verknfipfungspunkt 250 multipliziert. Entsprechend erfolgt auch eine Korrektur des Abstandes ABVE2 im Verknüpfungspunkt 250b.

Als Temperatur wird vorzugsweise die Kraftstofftemperatur, die mit einem geeigneten Sensor erfasst wird, verwendet. Die so korrigierte einzuspritzende Kraftstoffmenge QKH für die Haupteinspritzung wird in der Maximalauswahl 215 mit einer minimal darstellbaren Kraftstoffmenge verglichen. Diese wird abhängig vom Raildruck und dem Abstand ABVE1 und/oder dem Abstand ABVE2 zwischen den jeweiligen Teileinspritzungen aus einem Kennfeld mit der Minimalwertvorgabe 270 ausgelesen.

Erfindungsgemäß wird abhängig von dem Raildruck P und des vorzugsweise temperaturkorrigierten Abstandes der beiden Teileinspritzungen aus einem Kennfeld der Grundwert der Korrekturmenge berechnet. Das Kennfeld 245 enthält den Offset der Einspritzmenge mit vorgelagerter Einspritzung zur Kraftstoffmenge ohne vorgelagerte Einspritzung bei konstanter Kraftstofftemperatur als Funktion von Raildruck und dem Abstand der beiden Teileinpritzungen. Der Grundwert berücksichtigt die Abhängigkeit der Druckschwingungen und damit der Korrekturmenge vom zeitlichen Abstand der beiden Teileinspritzungen. Dabei ist dieser zeitliche Verlauf der Korrektur im geringen Umfang auch vom Raildruck abhängig.

Dieses Kennfeld wird am Pumpen- und/oder am Motorprüfstand bei den für den jeweiligen Druck typischen Einspritzmengen bzw. Einspritzdauer ermittelt. Der Abstand, der von der Mengenvorgabe 200 ermittelt wurde, wird mit dem Korrekturfaktor, der ebenfalls aus einem Kennfeld abhängig von Raildruck und Kraftstofftemperatur auslesbar ist, korrigiert und auf die Referenztemperatur des Grundkennfeldes normiert. Dieses Kennfeld wird vorzugsweise aus Kraftstoffdaten abgeleitet oder ebenfalls am Prüfstand gemessen. Der so korrigierte Abstand dient als Eingangsgröße für das Kennfeld zur Berechnung des Grundwertes.

Die aus dem Grundkennfeld berechnete Korrekturmenge wird anschließend mit dem Gewichtungsfaktor aus dem Gewichtungfaktorvorgabe 260 abgelegten Kennfeld abhängig von Raildruck und Einspritzmenge der zu korrigierenden Einspritzung multipliziert, um die Korrekturmenge an von der im Grundkennfeld berücksichtigten Einspritzmenge abweichenden Einspritzmengen anzupassen. Dieses Kennfeld wird ebenfalls am Prüfstand für einen oder zwei feste Abstände ABVE1 zwischen den beiden Teileinspritzungen bestimmt. Diese Abstände sind so gewählt, dass bei ihm ein Mengenmaximum und/oder ein Mengenminimum im Grundkennfeld auftritt.

Der so ermittelte Korrekturwert, der den Offset zu einer Einspritzung ohne vorgelagerte Einspritzung darstellt, wird nun im Verknüpfungspunkt von der gewünschten Einspritzmenge 210 abgezogen und der Maximalwertauswahl 215 zugeführt. In der Maximalwertauswahl 215 wird dieser Wert mit einer Minimalmenge verglichen, die aus dem Kennfeld der Minimalvorgabe 270 ausgelesen wird. Die Minimalmenge wird ebenfalls abhängig vom Raildruck und vom Abstand der beiden Teileinspritzungen berechnet. Zur Ermittlung des Kennfeldes wird die Ansteuerdauer der Injektoren auf die für den jeweiligen Raildruck minimale Ansteuerdauer gesetzt.

Eine besonders vorteilhafte Ausführungsform ist in Figur 2a dargestellt. Im Folgenden wird die Korrektur am Beispiel der Korrektur der Menge der Haupteinspritzung QKHE beschrieben. Eine Mengenvorgabe 200 bestimmt ein Signal QKHE, das die Einspritzmenge bei der Haupteinspritzung charakterisiert. Mit diesem Signal wird ein Verknüpfungspunkt 205 beaufschlagt. Am zweiten Eingang des Verknüpfungspunktes 205 liegt ebenfalls mit positiven Vorzeichen das Ausgangssignal einer Mengenausgleichsregelung 207. Das Ausgangssignal des Verknüpfungspunktes 205 gelangt mit positiven Vorzeichen zu einem zweiten Verknüpfungspunkt 210, der wiederum eine Maximalauswahl 215 beaufschlagt. Mit dem Ausgangssignal der Maximalauswahl 215 wird dann eine Kennfeldberechnung 220 beaufschlagt, die aus den Mengengrößen und weiteren Größen, wie beispielsweise dem Kraftstoffdruck, die Ansteuerdauer für die Injektoren bestimmt.

Am zweiten Eingang des Verknüpfungspunktes 210 liegt mit negativen Vorzeichen, das Ausgangssignal eines Schaltmittels 230, das wahlweise das Ausgangssignal einer Nullwertvorgabe 238 bzw. eines Verknüpfungspunktes 240 an den Verknüpfungspunkt 210 weiterleitet. Das Schaltmittel 230 wird von einer Korrektursteuerung 235 mit Ansteuersignalen beaufschlagt. Der Verknüpfungspunkt 240 verknüpft vorzugsweise multiplikativ das Ausgangssignal einer Grundwertvorgabe 245 und das Ausgangssignal einer Gewichtungsfaktorvorgabe 260.

Der Gewichtungsfaktorvorgabe 260 wird das Ausgangssignal QKHE der Mengenvorgabe 200 und das Ausgangssignal P des Raildrucksensors 145 zugeführt. Die Grundwertvorgabe 245 verarbeitet das Ausgangssignal QKVE1 der Mengenvorgabe 200 sowie das Ausgangssignal eines Verknüpfungspunktes 250. Dem Verknüpfungspunkt 250 wird von der Mengenvorgabe 200 ein Signal, das den Abstand ABVE1 zwischen den beiden Teileinspritzungen charakterisiert, zugeleitet. Desweiteren wird im Verknüpfungspunkt 250 ein Korrekturfaktor, der von einer Temperatur/Druck-Korrektur 255 bestimmt wird, zugeleitet. Die Temperatur/Druck-Korrektur 255 verarbeitet das Ausgangssignal T eines Temperatursensors 178 und das Ausgangssignal P des Raildrucksensors 145.

Einer Minimalwertvorgabe 270 wird ebenfalls das Ausgangssignal des Drucksensors 145 und das Ausgangssignal des Verknüpfungspunktes 250 zugeleitet. Dieses Signal gelangt zu einem Schaltmittel 280, an dessen zweiten Eingang das Ausgangssignal einer Minimalwertvorgabe 285 anlegt. Das Schaltmittel 280 leitet eines der beiden Signale, abhängig von dem Ansteuersignal einer der Korrektursteuerung 235 einen zweiten Eingang der Maximalauswahl 215 weiter.

Bei einer besonders vorteilhaften Ausgestaltung ist vorgesehen, dass auch der Einfluss einer zweiten Teileinspritzung berücksichtigt wird, die zeitlich vor der ersten Teileinspritzung liegt. Diese Ausführungsform ist gestrichelt dargestellt. Eine Weitere Grundwertvorgabe 245b verarbeitet das Ausgangssignal QKVE2 der Mengenvorgabe 200 sowie das Ausgangssignal eines Verknüpfungspunktes 250b. Dem Verknüpfungspunkt 250b wird von der Mengenvorgabe 200 ein Signal, das den Abstand ABVE2 zwischen der zu korrigierenden Teileinspritzung und der Teileinspritzung deren Abstand berücksichtigt wird, charakterisiert. Das Ausgangssignal der Grundwertvorgabe 245 b wird in einem weiteren Verknüpfungspunkt 248 mit dem Signal einer Wichtung 246 verknüpft, die den durch die zwischengelagerte Einspritzung abgeschwächten Einfluß berücksichtigen.

In der Mengenvorgabe 200 wird die einzuspritzende Kraftstoffmenge QKHE der Haupteinspritzung abhängig von verschiedenen Betriebskenngrößen wie beispielsweise dem Fahrerwunsch und der Drehzahl abgelegt. Dieser Wert wird im Verknüpfungspunkt 205 um das Ausgangssignal der Mengenausgleichsregelung 207 korrigiert. Die Mengenausgleichsregelung stellt sicher, dass alle Zylinder das gleiche Drehmoment zum Gesamtdrehmoment beitragen. Durch die Mengenausgleichsregelungen werden Streuungen der Injektoren bei der eingespritzten Kraftstoffmenge und/oder Einflüsse auf die Verbrennung, die zu ungleichen Drehmomenten führen, kompensiert.

Die so gebildete einzuspritzende Kraftstoffmenge QKHE für die Haupteinspritzung wird in dem Verknüpfungspunkt 210 mit einem Korrekturwert korrigiert, der den Einfluss der Druckschwankungen aufgrund der Voreinspritzung kompensiert. Der Korrekturwert setzt sich im wesentlichen aus dem Grundwert und einem Gewichtungsfaktor zusammen, die in dem Verknüpfungspunkt 240 multiplikativ verknüpft werden.

Der Grundwert ist in der Grundwertvorgabe 245, die vorzugsweise als Kennfeld ausgebildet ist, abgelegt. Der Grundwert wird von dem Kennfeld der Grundwertvorgabe 245 abhängig von der Voreinspritzmenge QKVE1 und einem korrigierten Abstand ABVE1 zwischen den beiden Teileinspritzungen aus dem Kennfeld ausgelesen. Vorzugsweise stellt die Abhängigkeit des Grundwerts vom Abstand eine periodische Funktion, die von den Druckschwingungen beeinflußt ist. Die Grundwertvorgabe 245 berücksichtigt im wesentlichen die Frequenz der Druckschwingungen.

Wird auch der Einfluß der weiter zurückliegenden Teileinspritzung berücksichtigt, so werden zwei Grundwerte für die beiden zu berücksichtigen Teileinspritzungen gebildet. Der durch vorzugsweise additive Verknüpfung gebildete Grundwert wird entsprechend verwendet.

Der Gewichtungsfaktor wird von der Gewichtungsfaktorvorgabe 260, die ebenfalls als Kennfeld ausgebildet ist, abhängig von dem Raildruck P und der einzuspritzenden Kraftstoffmenge bei der zu korrigierenden Einspritzung vorgegeben. Die Gewichtungsvorgabe berücksichtigt im wesentlichen die Amplitude der Druckschwingungen. Anschließend werden die beiden Werte multipliziert.

Mittels des Schalters 230 kann die Korrektur in bestimmten Betriebszuständen außer Funktion gesetzt werden. In diesen Betriebszuständen, in denen keine Korrektur erfolgt, wird von der Nullwertvorgabe 238 der Wert 0 als .Korrekturwert vorgegeben. Besonders vorteilhaft ist es, wenn der Abstand ABVE1 zwischen den beiden Teileinspritzungen abhängig von der Temperatur korrigiert wird. Hierzu ist in der Temperaturkorrektur 255 ein entsprechender Korrekturfaktor abhängig insbesondere von dem Raildruck P und/oder der Temperatur T abgelegt. Mit diesem Korrekturfaktor wird der Abstand ABVE1 im Verknüpfungspunkt 250 multipliziert. Entsprechend erfolgt auch eine Korrektur des Abstandes ABVE2 im Verknüpfungspunkt 250b.

Als Temperatur wird vorzugsweise die Kraftstofftemperatur, die mit einem geeigneten Sensor erfasst wird, verwendet. Die so korrigierte einzuspritzende Kraftstoffmenge QKHE für die Haupteinspritzung wird in der Maximalauswahl 215 mit einer minimal darstellbaren Kraftstoffmenge verglichen. Diese wird abhängig vom Raildruck und dem Abstand ABVE1 und/oder dem Abstand ABVE2 zwischen den jeweiligen Teileinspritzungen aus einem Kennfeld mit der Minimalwertvorgabe 270 ausgelesen.

Erfindungsgemäß wird abhängig von der Voreinspritzmenge QKVE und des vorzugsweise temperaturkorrigierten Abstandes der beiden Teileinspritzungen aus einem Kennfeld der Grundwert der Korrekturmenge berechnet. Das Kennfeld 245 enthält den Offset der Einspritzmenge mit vorgelagerter Einspritzung zur Kraftstoffmenge ohne vorgelagerte Einspritzung bei konstanter Kraftstofftemperatur als Funktion der Voreinspritzmenge und dem Abstand der beiden Teileinpritzungen. Der Grundwert berücksichtigt die Abhängigkeit der Druckschwingungen und damit der Korrekturmenge vom zeitlichen Abstand der beiden Teileinspritzungen. Dabei ist dieser zeitliche Verlauf der Korrektur im geringen Umfang auch von der Voreinspritzmenge abhängig. Ist die Voreinspritzmenge eine konstante Größe, so kann statt eines Kennfeldes eine Kennlinie verwendet werden.

Dieses Kennfeld wird am Pumpen- und/oder am Motorprüfstand bei den für den jeweiligen Druck typischen Einspritzmengen bzw. Einspritzdauer ermittelt. Der Abstand, der von der Mengenvorgabe 200 ermittelt wurde, wird mit dem Korrekturfaktor, der ebenfalls aus einem Kennfeld abhängig von Raildruck und Kraftstofftemperatur auslesbar ist, korrigiert und auf die Referenztemperatur des Grundkennfeldes normiert. Dieses Kennfeld wird vorzugsweise aus Kraftstoffdaten abgeleitet oder ebenfalls am Prüfstand gemessen. Der so korrigierte Abstand dient als Eingangsgröße für das Kennfeld zur Berechnung des Grundwertes.

Die aus dem Grundkennfeld berechnete Korrekturmenge wird anschließend mit dem Gewichtungsfaktor aus dem Gewichtungfaktorvorgabe 260 abgelegten Kennfeld abhängig von Raildruck und Einspritzmenge der zu korrigierenden Einspritzung multipliziert, um die Korrekturmenge an von der im Grundkennfeld berücksichtigten Einspritzmenge abweichenden Einspritzmengen anzupassen. Dieses Kennfeld wird ebenfalls am Prüfstand für einen oder zwei feste Abstände ABVE1 zwischen den beiden Teileinspritzungen bestimmt. Diese Abstände sind so gewählt, dass bei ihm ein Mengenmaximum und/oder ein Mengenminimum im Grundkennfeld auftritt.

Der so ermittelte Korrekturwert, der den Offset zu einer Einspritzung ohne vorgelagerte Einspritzung darstellt, wird nun im Verknüpfungspunkt von der gewünschten Einspritzmenge 210 abgezogen und der Maximalwertauswahl 215 zugeführt. In der Maximalwertauswahl 215 wird dieser Wert mit einer Minimalmenge verglichen, die aus dem Kennfeld der Minimalvorgabe 270 ausgelesen wird. Die Minimalmenge wird ebenfalls abhängig vom Raildruck und vom Abstand der beiden Teileinspritzungen berechnet. Zur Ermittlung des Kennfeldes wird die Ansteuerdauer der Injektoren auf die für den jeweiligen Raildruck minimale Ansteuerdauer gesetzt.

Bei dieser Ausführungsform wird der Grundwert ausgehend von Größen vorgegeben, die die bei der und/oder den vorgelagerten Teileinspritzung zugemessenen Kraftstoffmenge und einem korrigierten Abstand ABVE1 zwischen den beiden Teileinspritzungen charakterisieren. Der Gewichtungsfaktor wird ausgehend von Größen, die den Raildruck P und die einzuspritzende Kraftstoffmenge bei der zu korrigierenden Einspritzung charakterisieren, vorgegeben.

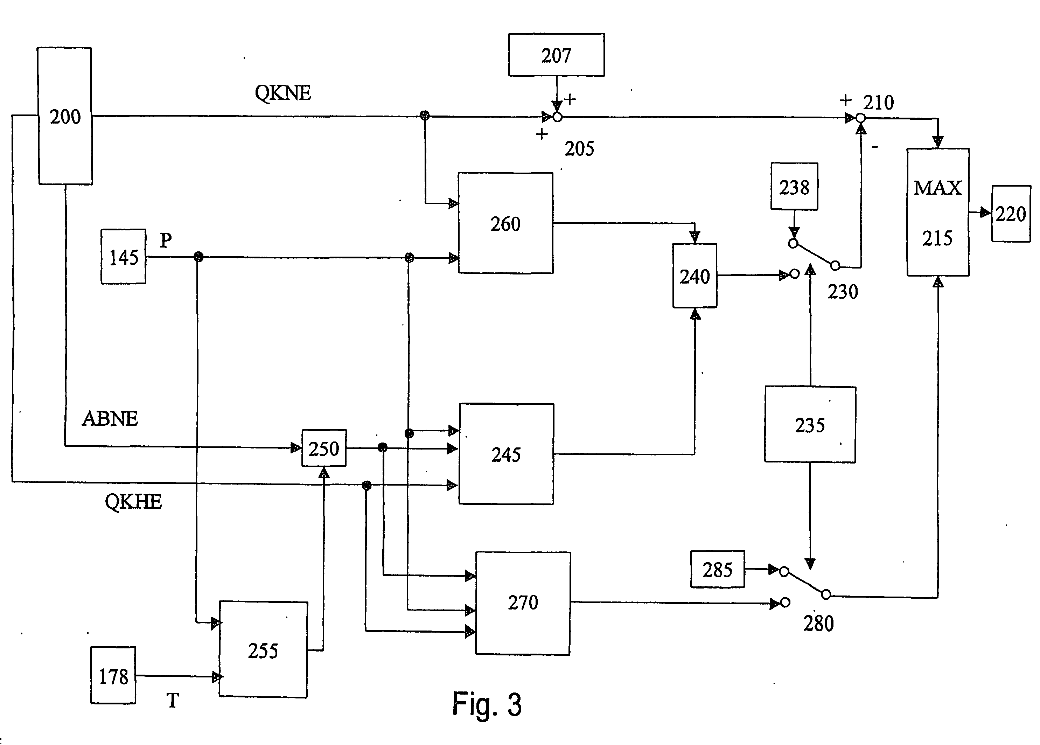

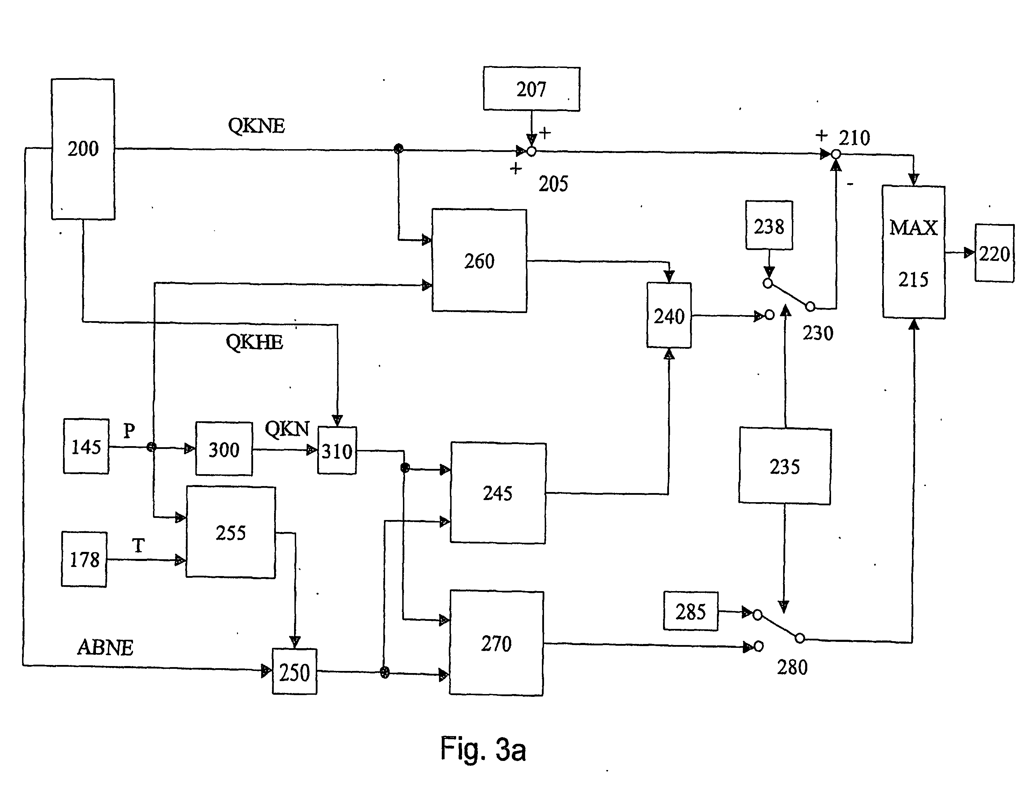

Eine weitere besonders vorteilhafte Ausgestaltung ist in Figur 3 dargestellt. Bereits in Figur 2 beschriebene Elemente sind mit entsprechenden Bezugszeichen bezeichnet. Der wesentliche Unterschied der Ausgestaltung gemäß Figur 3 zur Figur 2 liegt darin, dass hier die Haupteinspritzung die vorgelagerte Einspritzung und eine Nacheinspritzung die nachgelagerte Einspritzung bilden. Dies bedeutet es wird eine Größe QKNE korrigiert, die die bei der Nacheinspritzung zugemessene Kraftstoffmenge charakterisiert, korrigiert. Diese Korrektur erfolgt ausgehend von einer Größe ABNE, die den Abstand zwischen der Haupteinspritzung und der Nacheinspritzung kennzeichnet, und einer Größe QKHE, die die bei der Haupteinspritzung zugemessene Kraftstoffmenge charakterisiert. Ferner wird im Unterschied zu der Ausgestaltung der Figur 2 von der Grundwertvorgabe 245 und der Minimalwertvorgabe 270 zusätzlich die Kraftstoffmenge QKHE der vorgelagerten Einspritzung berücksichtigt. Hierzu beaufschlagt die Mengenvorgabe 200 die Grundwertvorgabe 245 und/oder die Minimalwertvorgabe 270 mit einer entsprechenden Größe QKHE, die die bei der vorgelagerten Einspritzung zugemessene Kraftstoffmenge charakterisiert.

Dies bedeutet, dass die Kennfelder der Blöcke 245 und 270 um eine Dimension erweitert werden müssen. Diese Vorgehensweise ist insbesondere geeignet, um den Einfluss der Haupteinspritzung auf die Nacheinspritzung zu korrigieren. Der Einfluss der Einspritzmenge bei der vorgelagerten Einspritzung ist hier zu berücksichtigen, da die Menge der Haupteinspritzung wesentlich größer ist als die der zweiten Teileinspritzung.

Bei dieser Ausführungsform wird der Grundwert ausgehend von Größen vorgegeben, die den Raildruck P, die bei der vorgelagerten Teileinspritzung zugemessenen Kraftstoffmenge und einem korrigierten Abstand zwischen den beiden Teileinspritzungen charakterisieren. Der Gewichtungsfaktor wird ausgehend von Größen, die den Raildruck P und die einzuspritzende Kraftstoffmenge bei der zu korrigierenden Einspritzung charakterisieren, vorgegeben.

Eine besonders vorteilhafte Ausgestaltung ist in Figur 3a dargestellt. Die Abhängigkeit der Korrektur vom Raildruck wird lediglich über die Abhängigkeit der Gewichtungsfaktorvorgabe 260 und/oder die Temperaturkorrektur 255 berücksichtigt. Diese sind entsprechend auszugestalten und zu applizieren. Aufgrund dieser Vorgehensweise vereinfacht sich die Applikation, insbesondere die Ermittlung der Kennfeldwerte, wesentlich.

Bei dieser Ausgestaltung wird die Kraftstoffmenge der vorgelagerten Teileinspritzung normiert. Diese normierte Kraftstoffmenge geht dann in die verschiedenen Berechnungen und Kennfelder ein. Die Kraftstoffmenge wird dabei auf die Menge QKN normiert, bei der von einem ballistischen Betrieb der Düsennadel auf einen Betrieb am Hubanschlag übergegangen wird. Das heißt es handelt sich um die Menge, bei der die Düsennadel gerade vollständig öffnet. Bei kleineren Mengen schließt die Düsennadel bereits bevor sie vollständig geöffnet war. Dieser Mengenwert hängt im wesentlichen vom Raildruck P ab. Durch diese Normierung ist es möglich das Grundkennfeld auch für die Nacheinspritzung zu verwenden.

Einem Verknüpfungspunkt 310 wird von einem Kennfeld 300 bereitgestellt, dem der Kraftstoffdruck P als Eingagnssignal zugeführt wird. Das Ausgangssignal des Verknüpfungspunktes wird dann an Stelle der Kraftstoffmenge der vorgelagerten Teileinspritzung verwendet. In dem Verknüpfungspunkt 310 wird die Kraftstoffmenge QKHE auf die Menge QKN normiert. In dem Kennfeld 300 ist die Menge QKN auf die normiert wird abhängig vom Druck P abgelegt. In der Grundwertvorgabe 245 sind die Korrekturwerte abhängig von dem korrigierten Abstand ABNE und der normierten Einspritzmenge abgelegt.

Bei dieser Ausführungsform wird der Grundwert ausgehend von Größen vorgegeben, die die bei der vorgelagerten Teileinspritzung zugemessenen Kraftstoffmenge und einem korrigierten Abstand ABVE1 zwischen den beiden Teileinspritzungen charakterisieren. Der Gewichtungsfaktor wird ausgehend von Größen, die den Raildruck P und die einzuspritzende Kraftstoffmenge bei der zu korrigierenden Einspritzung charakterisieren, vorgegeben.

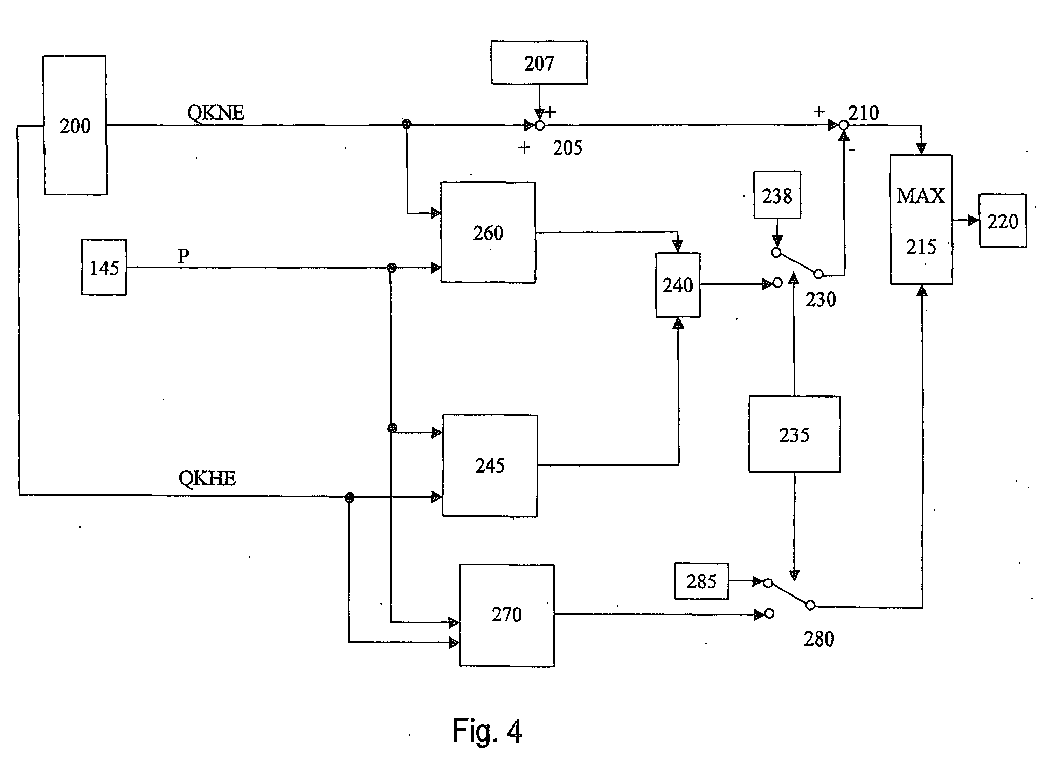

Eine weitere vorteilhafte Ausgestaltung ist in Figur 4 dargestellt, bei der der Abstand zwischen den beiden Teileinspritzungen nicht berücksichtigt wird. Diese Ausführungsform unterscheidet sich im wesentlichen von der Ausführungsform der Figur 3 darin, dass die Blöcke 178, 255, 250, die den Abstand der beiden Teileinspritzungen und deren Temperaturabhängigkeit berücksichtigen weggelassen werden.

Bei dieser Ausführungsform wird der Grundwert ausgehend von Größen vorgegeben, die den Raildruck P und die bei der vorgelagerten Teileinspritzun zugemessenen Kraftstoffmenge charakterisieren. Der Gewichtungsfaktor wird ausgehend von Größen, die den Raildruck P und die einzuspritzende Kraftstoffmenge bei der zu korrigierenden Einspritzung charakterisieren, vorgegeben.

## Patentansprüche

1. Verfahren zur Steuerung einer Brennkraftmaschine, wobei die Kraftstoffzumessung in wenigstens eine erste Teileinspritzung und eine zweite Teileinspritzung aufgeteilt ist, **dadurch gekennzeichnet, dass** bei der zweiten Teileinspritzung eine Kraftstoffmengengröße, die die bei der zweiten Teileinspritzung eingespritzten Kraftstoffmenge charakterisiert, abhängig von wenigstens einer Druckgröße, die den Kraftstoffdruck charakterisiert, der Kraftstoffmengengröße und wenigstens einer weiteren Größe Korrigiert wird.

2. Verfahren nach Anspruch 1, **dadurch gekennzeichnet, dass** ein Korrekturwert für die einzuspritzende Kraftstoffmenge ausgehend von einem mit dem Gewichtungsfaktor bewerteten Grundwert ermittelt wird.

3. Verfahren nach einem der vorhergehenden Ansprüche, **dadurch gekennzeichnet, dass** der Grundwert abhängig von wenigstens der Druckgröße und einem Abstand der beiden Teileinspritzungen oder abhängig von wenigstens der Druckgröße und der bei der ersten Teileinspritzung eingespritzten Kraftstoffmenge ermittelt wird.

4. Verfahren nach einem der vorhergehenden Ansprüche, **dadurch gekennzeichnet, dass** der Gewichtungsfaktor abhängig von wenigstens der Kraftstoffmengengröße ermittelt wird.

5. Verfahren nach einem der vorhergehenden Ansprüche, **dadurch gekennzeichnet, dass** als weitere Größe eine Temperaturgröße verwendet wird.

6. Verfahren nach einem der vorhergehenden Ansprüche, **dadurch gekennzeichnet, dass** die korrigierte Kraftstoffmengengröße auf einen Minimalwert begrenzt wird.

7. Verfahren nach Anspruch 6, **dadurch gekennzeichnet, dass** der Minimalwert wenigstens abhängig von dem Raildruck und/oder dem Abstand der beiden Teileinspritzungen vorgebbar ist.

8. Verfahren nach einem der vorhergehenden Ansprüche, **dadurch gekennzeichnet, dass** die Korrektur nach einer weiteren Korrektur durch eine Mengenausgleichsregelung erfolgt.

9. Verfahren nach einem der vorhergehenden Ansprüche,
**dadurch** gekennzeichhet, dass die Korrektur nur in bestimmten Betriebszuständen erfolgt.

10. Vorrichtung zur Steuerung einer Brennkraftmaschine, wobei die Kraftstoffzumessung in wenigstens eine erste Teileinspritzung und eine zweite Teileinspritzung aufgeteilt ist, **dadurch gekennzeichnet, dass** Mittel vorgesehen sind, die bei der zweiten Teileinspritzung eine Kraftstoffmengengröße, die die bei der zweiten Teileinspritzung eingespritzten Kraftstoffmenge charakterisiert, abhängig von wenigstens einer Druckgröße, die den Kraftstoffdruck charakterisiert, der Kraftstoffmengengröße und wenigstens einer weiteren Größe korrigieren.

## Claims

1. Method for controlling an internal combustion engine, wherein the metering of fuel is divided into at least a first partial injection and a second partial injection, **characterized in that** during the second partial injection a fuel quantity variable which characterizes the fuel quantity injected during the second partial injection is corrected as a function of at least one pressure variable which characterizes the fuel pressure, the fuel quantity variable and at least one further variable.

2. Method according to Claim 1, **characterized in that** a correction value for the fuel quantity to be injected is determined as a function of a basic value evaluated using the weighting factor.

3. Method according to one of the preceding claims, **characterized in that** the basic value is determined as a function of at least the pressure variable and an interval between the two partial injections or as a function of at least the pressure variable and the fuel quantity injected during the first partial injection.

4. Method according to one of the preceding claims, **characterized in that** the weighting factor is determined as a function of at least the fuel quantity variable.

5. Method according to one of the preceding claims, **characterized in that** a temperature variable is used as a further variable.

6. Method according to one of the preceding claims, **characterized in that** the corrected fuel quantity variable is limited to a minimum value.

7. Method according to Claim 6, **characterized in that** the minimum value can be predefined at least as a function of the rail pressure and/or the interval between the two partial injections.

8. Method according to one of the preceding claims, **characterized in that** the correction is carried out in accordance with a further correction by a quantity equalization controller.

9. Method according to one of the preceding claims, **characterized in that** the correction is carried out only in specific operating states.

10. Device for controlling an internal combustion engine, wherein the metering of fuel is divided into at least a first partial injection and a second partial injection, **characterized in that** means are provided which, during the second partial injection, correct a fuel quantity variable which characterizes the fuel quantity injected during the second partial injection, as a function of at least one pressure variable which characterizes the fuel pressure, the fuel quantity variable and at least one further variable.

## Revendications

1. Procédé pour commander un moteur à combustion interne selon lequel le dosage du carburant est divisé en au moins une première injection partielle et une seconde injection partielle,
**caractérisé en ce que**
lors de la seconde injection partielle, une grandeur de débit de carburant qui caractérise le débit injecté lors de la seconde injection partielle est corrigée en fonction d'au moins une grandeur de pression qui caractérise la pression du carburant, de la grandeur de débit de carburant et d'au moins une autre grandeur.

2. Procédé selon la revendication 1,
**caractérisé en ce qu'**
une valeur de correction du débit de carburant à injecter est établie en partant d'une valeur de base pondérée par un facteur de pondération.

3. Procédé selon la revendication 1 ou 2,
**caractérisé en ce que**
la valeur de base est établie en fonction d'au moins une grandeur de pression et de l'intervalle entre les deux injections partielles, ou en fonction d'au moins la grandeur de pression et du débit de carburant injecté lors de la première injection partielle.

4. Procédé selon l'une des revendications précédentes,
**caractérisé en ce que**
le facteur de pondération est établi en fonction d'au moins le débit de carburant.

5. Procédé selon l'une des revendications précédentes,
**caractérisé en ce que**
comme autre grandeur, est utilisée une grandeur de température.

6. Procédé selon l'une des revendications précédentes,
**caractérisé en ce que**
la grandeur de débit de carburant corrigée est limitée à une valeur minimale.

7. Procédé selon la revendication 6,
**caractérisé en ce que**
la valeur minimale peut être prédéfinie en fonction de la pression dans la rampe d'injection et/ou de l'intervalle séparant les deux injections partielles.

8. Procédé selon l'une des revendications précédentes,
**caractérisé en ce que**
la correction a lieu après une autre correction effectuée par une régulation d'équilibrage de débit.

9. Procédé selon l'une des revendications précédentes,
**caractérisé en ce que**
la correction n'a lieu que dans des états de fonctionnement définis.

10. Dispositif pour commander un moteur à combustion interne, dans lequel le dosage de carburant est divisé en au moins une première injection partielle et une seconde injection partielle,
**caractérisé en ce qu'**
il est prévu des moyens qui, lors de la seconde injection partielle, corrigent une grandeur de débit de carburant qui caractérise le débit de carburant injecté lors de la seconde injection partielle, en fonction d'au moins une grandeur de pression qui caractérise la pression de carburant, du débit de carburant et d'au moins une autre grandeur.
